# EUROPEAN PATENT SPECIFICATION

(11) **EP 3 950 500 B1**
(45) Date of publication and mention of the grant of the patent: **25.12.2024**
(21) Application number: 20784903.5
(22) Date of filing: 30.03.2020
(51) Int. Cl.: B64C 39/02, B64C 15/14, B64D 17/80, B64D 25/00, B64C 25/56, B64C 17/00, B64D 45/00

(54) **DRONE AND DRONE FALL PREVENTION SYSTEM**
DROHNE UND DROHNENFALLSCHUTZSYSTEM
DRONE ET SYSTÈME DE PRÉVENTION DE CHUTE DE DRONE

(30) Priority: 03.04.2019 KR 20190039106
(43) Date of publication of application: 09.02.2022
(73) Proprietor: Korea Aerospace Research Institute, Daejeon 34133 (KR)
(72) Inventor: LEE, Seon Ho, Daejeon 34020 (KR)
(74) Representative: J A Kemp LLP
(86) International application number: PCT/KR2020/004283
(87) International publication number: WO 2020/204511

(56) References cited:
- KR-A- 20170 125 588
- KR-A- 20170 125 588
- KR-A- 20180 014 034
- KR-B1- 100 812 756
- KR-B1- 100 812 756
- KR-B1- 101 579 409
- US-A1- 2002 104 921
- US-A1- 2002 104 921
- US-A1- 2010 012 790
- US-A1- 2013 205 941
- US-A1- 2017 313 433
- US-A1- 2018 105 266

## Description

The following example embodiments relate to a drone and a drone fall prevention system.

A drone initially used for military purposes refers to an unmanned aerial vehicle or a helicopter-shaped flying vehicle that flies by induction of radio waves without a human pilot or operator being on board. Recently, drones are being widely used for military and commercial purposes, and research has been actively conducted on drones to be used for various purposes.

For example, the US Patent Publication No. 2012-0061508 entitled "Device for Firing Weapons from an Armed Drone" published on March 15, 2012, discloses a drone. US 2002/104921 A1 discloses an electrical remote-control and remote-power flying saucer. KR 100 812 756 B1 discloses a quadrocopter. KR 2017 0125588 A discloses an unmanned aircraft (drone). US 2018/105266 A1 discloses an unmanned aerial vehicle. US 2010/012790 A1 discloses a gyro-stabilized air vehicle. US 2013/205941 A1 discloses a horizontal attitude stabilization device for disc air vehicle.

According to the present invention, there is provided a drone fall prevention system as defined in claim 1.

When the drone fails, the controller may stabilize a posture of the main body by driving the first rotation stabilizing portion, to prevent an occurrence of a tumbling phenomenon.

Also, the controller may control the driving of the first rotation stabilizing portion so that an error between an angular velocity value for a preset yaw axis and an angular velocity value for an actual yaw axis may be minimized.

In addition, the drone fall prevention system may further include a second rotation stabilizing portion disposed on a bottom surface of the main body of the drone. The second rotation stabilizing portion may include a propeller, and a motor configured to provide a rotational force to the propeller, and may be configured to generate an angular velocity with respect to the yaw angle of the main body and a thrust force for the main body at the same time.

According to example embodiments, a drone and a drone fall prevention system may prevent a tumbling phenomenon from occurring when the drone falls due to a failure of the drone during flight, thereby stabilizing a posture of the falling drone.

According to example embodiments, a drone and a drone fall prevention system may delay the drone by delaying a falling speed when the drone falls due to a failure of the drone during flight.

According to example embodiments, a drone and a drone fall prevention system may secure a time required to deploy a parachute by delaying a falling speed when the drone falls due to a failure of the drone during flight.

According to example embodiments, a drone and a drone fall prevention system may maintain an altitude by additionally generating a thrust force for a translational motion when the drone falls due to a failure of the drone during flight.

Hereinafter, example embodiments will be described in detail with reference to the accompanying drawings.
FIG. 1 illustrates an example of a drone including a first rotation stabilizing portion according to an example embodiment.
FIG. 2 illustrates an operating principle of a first rotation stabilizing portion according to an example embodiment.
FIG. 3 illustrates an example of a drone including a first rotation stabilizing portion (not in accordance with the present invention).
FIG. 4 illustrates an operating principle of a first rotation stabilizing portion (not in accordance with the present invention).
FIG. 5 illustrates a drone including a second rotation stabilizing portion according to an example embodiment.
FIG. 6 illustrates an operation sequence of a drone according to an example embodiment.
FIGS. 7 and 8 illustrate effects of a drone according to an example embodiment.

The following description is provided according to one of various aspects of the example embodiments, and may constitute a part of detailed description of the example embodiments.

However, in describing an example embodiment, detailed description of known functions or configurations will be omitted for the sake of clarity and conciseness.

In addition, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

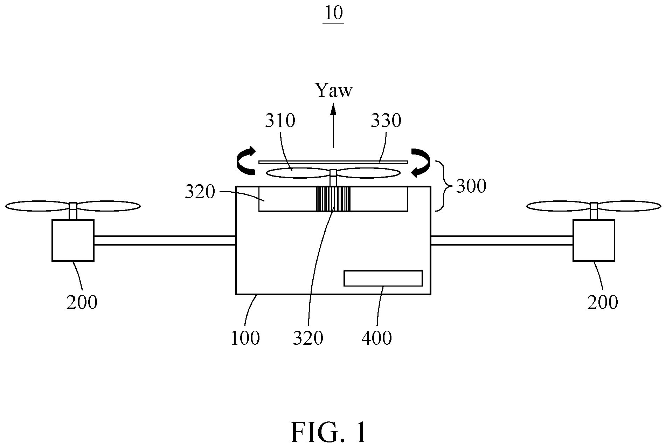

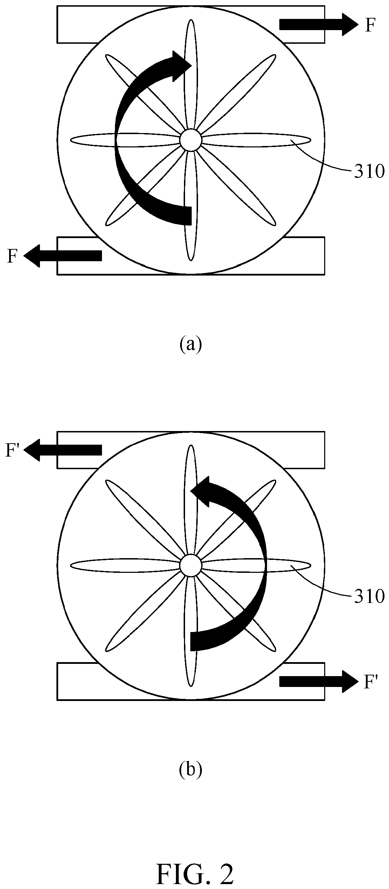

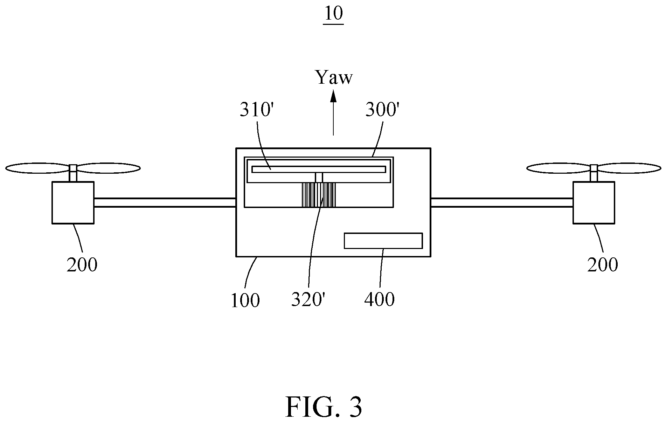

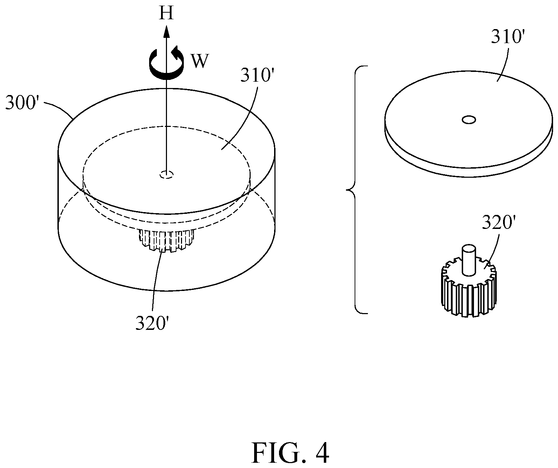

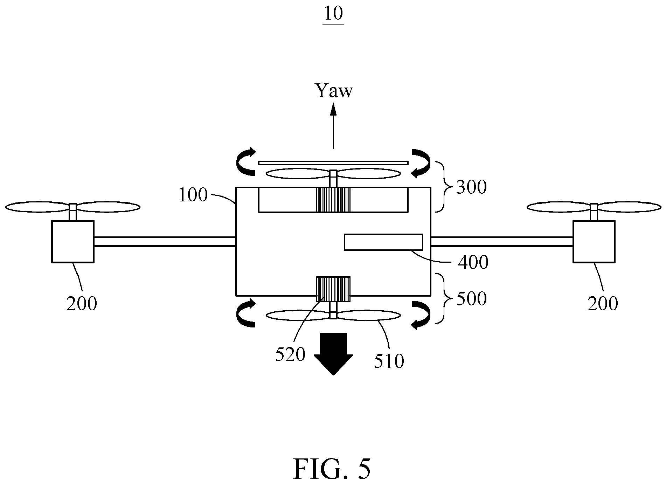

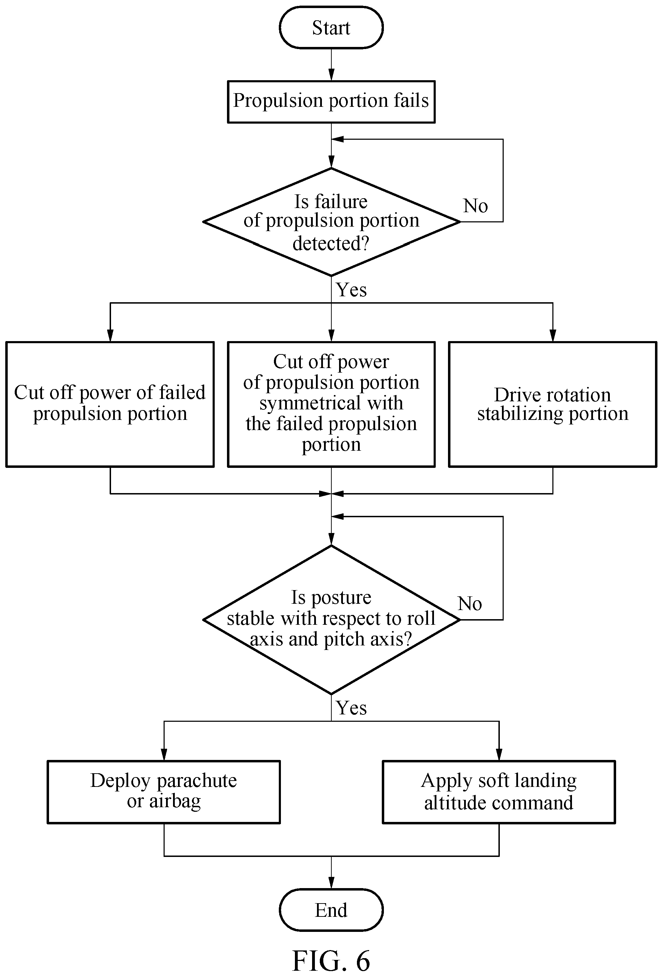

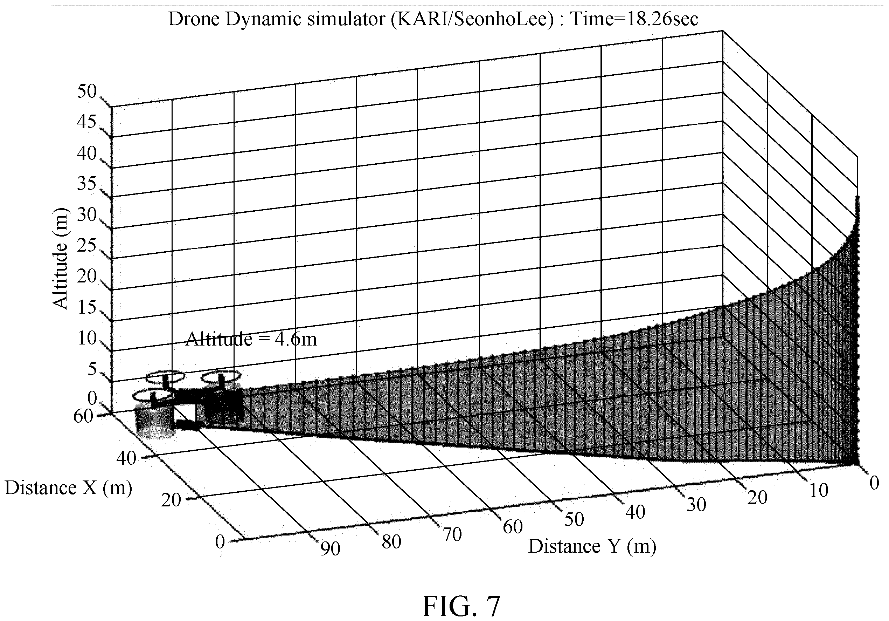

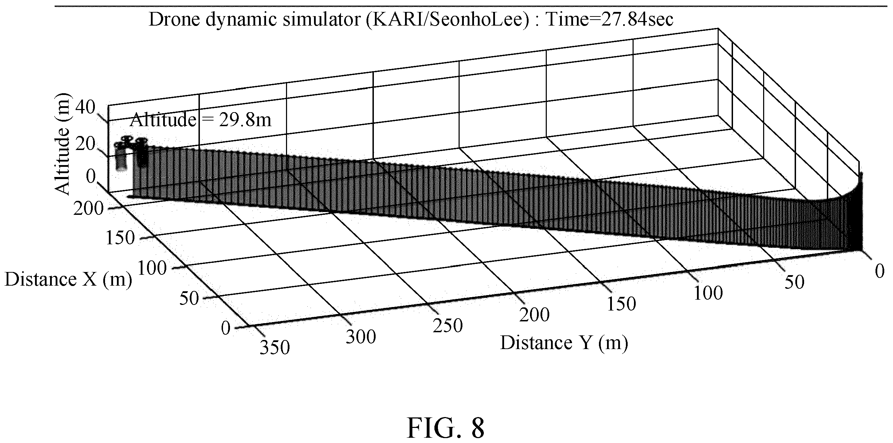

FIG. 1 illustrates an example of a drone including a first rotation stabilizing portion according to an example embodiment, and FIG. 2 illustrates an operating principle of a first rotation stabilizing portion according to an example embodiment. FIG. 3 illustrates an example of a drone including a first rotation stabilizing portion according to a modified example embodiment, and FIG. 4 illustrates an operating principle of a first rotation stabilizing portion according to a modified example embodiment. FIG. 5 illustrates a drone including a second rotation stabilizing portion according to an example embodiment, and FIG. 6 illustrates an operation sequence of a drone according to an example embodiment. FIGS. 7 and 8 illustrate effects of a drone according to an example embodiment.

Referring to FIG. 1, a drone 10 according to an example embodiment includes a main body 100, a propulsion portion 200 disposed outside the main body 100 to generate a thrust force, a first rotation stabilizing portion 300 disposed on a top surface of the main body 100 to generate an angular velocity with respect to a yaw axis Yaw of the main body, and a controller 400 configured to control driving of the first rotation stabilizing portion 300. When the propulsion portion 200 fails, the controller 400 is configured to stabilize a posture of the main body 100 by driving the first rotation stabilizing portion 300, to prevent an occurrence of a tumbling phenomenon.

For example, the controller 400 may be configured to drive the first rotation stabilizing portion 300 so that an error between an angular velocity value for a preset yaw axis and an angular velocity value for an actual yaw axis may be minimized. In this example, a PID control may be used as a control logic of the controller 400.

Specifically, the first rotation stabilizing portion 300 is disposed on the top surface of the main body 100, and includes a propeller 310, a motor 320 disposed below the propeller 310 to provide a rotational force to the propeller, and a shielding element 330 disposed above the propeller to prevent a thrust force from being generated by a rotation of the propeller. Here, a rotation axis of the motor 320 needs to be aligned with the yaw axis of the body 100.

Referring to FIG. 2, the first rotation stabilizing portion 300 according to an example embodiment including the above configuration rotates the drone using a force of wind in a direction orthogonal to the yaw axis, the force of wind being generated when the propeller 310 rotates. For example, as shown in (a) of FIG. 2, when the propeller 310 rotates in a clockwise direction, a rotational force may be generated in a positive direction with respect to the yaw axis of the main body by a force F of wind. In addition, as shown in (b) of FIG. 2, when the propeller 310 rotates in a counterclockwise direction, a rotational force may be generated in a negative direction with respect to the yaw axis of the main body by a force F' of wind.

Referring to FIG. 3, in an example not in accordance with the present invention, the drone may include a first rotation stabilizing portion 300' according to a modified example embodiment. Here, a main body, a propulsion portion, and a controller may be all the same as the above-described configurations, and the first rotation stabilizing portion 300' may be obtained by modification.

The first rotation stabilizing portion 300' may be disposed inside the main body 100, and may include a flywheel 310', and a motor 320' disposed below the flywheel to provide a rotational force to the flywheel.

Here, a rotation axis of the motor 320' may be set to be parallel to a yaw axis of the main body. In other words, unlike the above-described first rotation stabilizing portion 300, in the first rotation stabilizing portion 300' according to the modified example embodiment, the rotation axis of the motor may not need to be aligned with the yaw axis of the main body and may be freely placed inside the main body such that the rotation shaft of the motor is parallel to the yaw axis of the main body.

Referring to FIG. 4, in an example not in accordance with the present invention, the first rotation stabilizing portion 300' may rotate the drone using a reaction force generated when the flywheel 310' rotates.

In addition, referring to FIG. 5, the drone 10 may further include a second rotation stabilizing portion 500 disposed on a bottom surface of the main body 100. The second rotation stabilizing portion 500 may include a propeller 510, and a motor 520 configured to provide a rotational force to the propeller. In other words, the second rotation stabilizing portion 500 does not include a shielding element, unlike the first rotation stabilizing portion 300. Accordingly, the second rotation stabilizing portion 500 may generate an angular velocity with respect to the yaw axis Yaw of the main body and a thrust force for the main body at the same time.

Based on the above configuration of the second rotation stabilizing portion 500, a rotational momentum and a thrust force for a translational motion may be generated at the same time, and thus it may be possible to utilize the thrust force added by the second rotation stabilizing portion 500 as a thrust force to maintain an altitude which is insufficient due to a failure.

In addition, the drone 10 may include a plurality of propulsion portions. For example, when one of the plurality of propulsion portions fails, the controller 400 may stop driving a propulsion portion that is disposed symmetrically with the failed propulsion portion based on the main body.

Also, the drone 10 may further include a parachute (not shown) or an airbag (not shown) accommodated in the main body.

An operation sequence of a drone with the above configuration is shown in FIG. 6.

For example, when one of a plurality of propulsion portions fails, a failure of a propulsion portion may be detected based on a sensor value and posture information of the drone. When the failure is detected, power of the failed propulsion portion may be cut off, and power of a propulsion portion disposed symmetrically with the failed propulsion portion may be cut off. When the power is cut off, a controller may drive a rotation stabilizing portion to prevent a tumbling phenomenon from occurring in the drone. A constant angular velocity with respect to a yaw axis of a main body of the drone may be maintained by an operation of the rotation stabilizing portion, and accordingly the drone may maintain a horizontal posture. In addition, when whether the posture is stable with respect to a roll axis and a pitch axis of the drone is determined, a parachute or an airbag may be deployed before the drone lands on the ground. Alternatively, soft landing of the drone may be induced by slowly decreasing a command altitude.

An effect of preventing the drone from falling by the operation of the rotation stabilizing portion may be confirmed through experimental data of FIGS. 7 and 8.

Referring to FIG. 7, when the controller performs control by inputting a soft landing command to the rotation stabilizing portion, an altitude of the drone that fails or breaks down may be gradually lowered to make a soft landing. On the other hand, referring to FIG. 8, it may be confirmed that when the controller controls only the posture, instead of inputting a separate soft landing command to the rotation stabilizing portion, the altitude of the drone that fails or breaks down may be maintained at a predetermined level.

The drone with the above-described configuration may prevent a tumbling phenomenon from occurring when the drone falls due to a failure of the drone during flight, to stabilize the posture of the falling drone, and may be delayed by delaying the falling speed.

In addition, the drone may secure a time required to deploy a parachute by delaying the falling speed, and may maintain the altitude at a predetermined level by additionally generating a thrust force for a translational motion.

A drone fall prevention system according to an example embodiment may be selectively attached to or detached from the drone, and may control a movement of the drone when the drone falls due to a failure of the drone. The drone fall prevention system includes a first rotation stabilizing portion that is disposed on the upper surface of the main body to generate an angular velocity with respect to the yaw axis of the main body, and a controller configured to drive the first rotation stabilizing portion.

When the drone fails, the controller is configured to stabilize a posture of the main body by driving the first rotation stabilizing portion, to prevent an occurrence of a tumbling phenomenon.

In addition, the controller may control the driving of the first rotation stabilizing portion so that an error between an angular velocity value for a preset yaw axis and an angular velocity value for an actual yaw axis may be minimized.

Here, the first rotation stabilizing portion is disposed on the top surface of the main body, and includes a propeller, a motor disposed below the propeller to provide a rotational force to the propeller, and a shielding element disposed above the propeller to prevent a thrust force from being generated by a rotation of the propeller. Also, a rotation shaft of the motor is aligned with the yaw axis of the main body, and the first rotation stabilizing portion is configured to rotate the drone using a force of wind in a direction orthogonal to the yaw axis, the force of wind being generated when the propeller rotates.

In an illustrative example not covered by the scope of the appended claims, the first rotation stabilizing portion may disposed inside the main body, and may include a flywheel, and a motor disposed below the flywheel to provide a rotational force to the flywheel. Here, a rotation shaft of the motor may be set to be parallel to the yaw axis of the main body. The first rotation stabilizing portion may be configured to rotate the drone using a reaction force generated when the flywheel rotates.

In addition, the drone fall prevention system may further include a second rotation stabilizing portion disposed on a bottom surface of the main body of the drone. The second rotation stabilizing portion may include a propeller, and a motor configured to provide a rotational force to the propeller, and may be configured to generate an angular velocity with respect to the yaw axis of the main body and a thrust force for the main body at the same time.

## Claims

1. A drone fall prevention system for controlling a movement of a drone (10) when the drone falls due to a failure of the drone, and comprising:
a first rotation stabilizing portion (300) configured to be disposed on a top surface of a main body (100) of the drone to generate an angular velocity with respect to a yaw axis of the main body; and
a controller (400) configured to drive the first rotation stabilizing portion (300),
wherein when the drone fails, the controller is configured to stabilize a posture of the main body (100) by driving the first rotation stabilizing portion (300), to prevent an occurrence of a tumbling phenomenon,
wherein the first rotation stabilizing portion (300) comprises:
a propeller (310);
a motor (320) disposed below the propeller to provide a rotational force to the propeller (310), wherein a rotation shaft of the motor is configured to be aligned with the yaw axis of the main body; and
a shielding element (330) disposed above the propeller to prevent a thrust force from being generated by a rotation of the propeller, and
wherein the first rotation stabilizing portion (300) is configured to rotate the drone (10) using a force of wind in a direction orthogonal to the yaw axis, the force of wind being generated when the propeller (310) rotates.

2. The drone fall prevention system of claim 1, wherein the controller (400) is configured to control the driving of the first rotation stabilizing portion (300) so that an error between an angular velocity value for a preset yaw axis and an angular velocity value for an actual yaw axis is minimized.

3. The drone fall prevention system of any of the preceding claims, further comprising:
a second rotation stabilizing portion (500) configured to be disposed on a bottom surface of the main body (100) of the drone,
wherein the second rotation stabilizing portion comprises:
a propeller (510); and
a motor (520) configured to provide a rotational force to the propeller, and
the second rotation stabilizing portion is configured to generate an angular velocity with respect to the yaw angle of the main body and a thrust force for the main body at the same time.

4. The drone fall prevention system of any of the preceding claims, wherein the drone fall prevention system is configured to be selectively attached to and detached from the drone (10).

5. A drone (10) comprising:
a main body (100);
a propulsion portion (200) disposed outside the main body to generate a thrust force; and
the drone fall prevention system of any of claims 1 to 4.

6. The drone of claim 5, wherein
the drone comprises a plurality of propulsion portions (200), and
when one of the plurality of propulsion portions fails, the controller (400) is configured to stop driving a propulsion portion (200) that is disposed symmetrically with the failed propulsion portion based on the main body.

7. The drone of claim 6, further comprising:
a parachute or an airbag accommodated in the main body (100).

## Patentansprüche

1. Drohnen-Absturzsicherungssystem zur Steuerung der Bewegung einer Drohne (10), wenn die Drohne aufgrund eines Fehlers der Drohne abstürzt, und umfassend:
einen ersten Rotationsstabilisierungsabschnitt (300), der konfiguriert ist, um auf einer Oberseite eines Hauptkörpers (100) der Drohne angeordnet zu sein, um eine Winkelgeschwindigkeit in Bezug auf eine Gierachse des Hauptkörpers zu erzeugen; und
eine Steuervorrichtung (400), die konfiguriert ist, um den ersten Rotationsstabilisierungsabschnitt (300) anzutreiben,
wobei die Steuervorrichtung konfiguriert ist, um bei einem Ausfall der Drohne die Haltung des Hauptkörpers (100) durch Antreiben des ersten Rotationsstabilisierungsabschnitts (300) zu stabilisieren, um das Auftreten eines Taumelphänomens zu verhindern,
wobei der erste Rotationsstabilisierungsabschnitt (300) Folgendes umfasst:
einen Propeller (310);
einen Motor (320), der unter dem Propeller angeordnet ist, um eine Rotationskraft auf den Propeller (310) auszuüben, wobei eine Rotationswelle des Motors konfiguriert ist, um mit der Gierachse des Hauptkörpers ausgerichtet zu sein; und
ein Abschirmelement (330), das über dem Propeller angeordnet ist, um zu verhindern, dass durch eine Rotation des Propellers eine Schubkraft erzeugt wird, und
wobei der erste Rotationsstabilisierungsabschnitt (300) konfiguriert ist, um die Drohne (10) unter Verwendung einer Windkraft in einer Richtung orthogonal zur Gierachse zu drehen, wobei die Windkraft erzeugt wird, wenn sich der Propeller (310) dreht.

2. Drohnen-Absturzsicherungssystem nach Anspruch 1, wobei die Steuervorrichtung (400) konfiguriert ist, um den Antrieb des ersten Rotationsstabilisierungsabschnitts (300) so zu steuern, dass ein Fehler zwischen einem Winkelgeschwindigkeitswert für eine voreingestellte Gierachse und einem Winkelgeschwindigkeitswert für eine tatsächliche Gierachse minimiert wird.

3. Drohnen-Absturzsicherungssystem nach einem der vorstehenden Ansprüche, ferner umfassend:
einen zweiten Rotationsstabilisierungsabschnitt (500), der konfiguriert ist, um auf einer Bodenfläche des Hauptkörpers (100) der Drohne angeordnet zu sein,
wobei der zweite Rotationsstabilisierungsabschnitt Folgendes umfasst:
einen Propeller (510); und
einen Motor (520), der konfiguriert ist, um eine Rotationskraft auf den Propeller auszuüben, und
wobei der zweite Rotationsstabilisierungsabschnitt konfiguriert ist, um gleichzeitig eine Winkelgeschwindigkeit in Bezug auf den Gierwinkel des Hauptkörpers und eine Schubkraft für den Hauptkörper zu erzeugen.

4. Drohnen-Absturzsicherungssystem nach einem der vorstehenden Ansprüche, wobei das Drohnen-Absturzsicherungssystem konfiguriert ist, um selektiv an der Drohne (10) angebracht und von dieser abgenommen zu werden.

5. Drohne (10), umfassend:
einen Hauptkörper (100);
einen außerhalb des Hauptkörpers angeordneten Antriebsabschnitt (200) zur Erzeugung einer Schubkraft; und
das Drohnen-Absturzsicherungssystem nach einem der Ansprüche 1 bis 4.

6. Drohne nach Anspruch 5, wobei
die Drohne eine Vielzahl von Antriebsabschnitten (200) umfasst, und
wenn einer der Vielzahl von Antriebsabschnitte ausfällt, die Steuervorrichtung (400) konfiguriert ist, um den Antrieb eines Antriebsabschnitts (200) anzuhalten, der symmetrisch zum ausgefallenen Antriebsabschnitt basierend auf dem Hauptkörper angeordnet ist.

7. Drohne nach Anspruch 6, ferner umfassend:
einen Fallschirm oder einen Airbag, der in dem Hauptkörper (100) untergebracht ist.

## Revendications

1. Système de prévention de chute de drone pour commander un mouvement d'un drone (10) lors de la chute du drone en raison d'une panne du drone, et comprenant :
une première partie de stabilisation de rotation (300) configurée pour être disposée sur une surface supérieure d'un corps principal (100) du drone pour générer une vitesse angulaire par rapport à un axe de lacet du corps principal ; et
une unité de commande (400) configurée pour entraîner la première partie de stabilisation de rotation (300),
dans lequel, lorsque le drone tombe en panne, l'unité de commande est configurée pour stabiliser une position du corps principal (100) en entraînant la première partie de stabilisation de rotation (300), pour empêcher une survenue d'un phénomène de culbutage,
dans lequel la première partie de stabilisation de rotation (300) comprend :
une hélice (310) ;
un moteur (320) disposé en dessous de l'hélice pour fournir une force de rotation à l'hélice (310), dans lequel un arbre de rotation du moteur est configuré pour être aligné avec l'axe de lacet du corps principal ; et
un élément de protection (330) disposé au-dessus de l'hélice pour empêcher une force de poussée d'être générée par une rotation de l'hélice, et
dans lequel la première partie de stabilisation de rotation (300) est configurée pour entraîner la rotation du drone (10) en utilisant une force du vent dans une direction orthogonale à l'axe de lacet, la force du vent étant générée lorsque l'hélice (310) est en rotation.

2. Système de prévention de chute de drone de la revendication 1, dans lequel l'unité de commande (400) est configurée pour commander l'entraînement de la première partie de stabilisation de rotation (300) de telle sorte qu'une erreur entre une valeur de vitesse angulaire pour un axe de lacet prédéterminée et une valeur de vitesse angulaire pour un axe de lacet réel est minimisée.

3. Système de prévention de chute de drone de quelconques des revendications précédentes, comprenant en outre :
une seconde partie de stabilisation de rotation (500) configurée pour être disposée sur une surface inférieure du corps principal (100) du drone,
dans lequel la seconde partie de stabilisation de rotation comprend :
une hélice (510) ; et
un moteur (520) configuré pour fournir une force de rotation à l'hélice,
et
la seconde partie de stabilisation de rotation est configurée pour générer une vitesse angulaire par rapport à l'angle de lacet du corps principal et une force de poussée pour le corps principal en même temps.

4. Système de prévention de chute de drone de quelconques des revendications précédentes, dans lequel le système de prévention de chute de drone est configuré pour être sélectivement attaché au drone (10) et détaché de celui-ci.

5. Drone (10), comprenant :
un corps principal (100) ;
une partie de propulsion (200) disposée à l'extérieur du corps principal pour générer une force de poussée, et
le système de prévention de chute de drone de quelconques des revendications 1 à 4.

6. Drone de la revendication 5, dans lequel
le drone comprend une pluralité de parties de propulsion (200), et
lorsqu'une de la pluralité de parties de propulsion tombe en panne, l'unité de commande (400) est configurée pour arrêter d'entraîner une partie de propulsion (200) qui est disposée symétriquement avec la partie de propulsion en panne sur la base du corps principal.

7. Drone de la revendication 6, comprenant en outre :
un parachute ou un coussin gonflable logé dans le corps principal (100).
